(19) Europäisches Patentamt / European Patent Office / Office européen des brevets

(11) **EP 3 897 271 B1**

(12) **EUROPEAN PATENT SPECIFICATION**

(45) Date of publication and mention
of the grant of the patent:
**12.02.2025 Bulletin 2025/07**

(21) Application number: **19827619.8**

(22) Date of filing: **19.12.2019**

(51) International Patent Classification (IPC):
*A43B 23/02* (2006.01)    *B32B 9/02* (2006.01)
*B32B 7/12* (2006.01)     *B32B 9/04* (2006.01)

(52) Cooperative Patent Classification (CPC):
**A43B 23/021; A43B 23/0235; B32B 7/12;
B32B 9/025; B32B 9/047;** B32B 2307/54;
B32B 2307/544; B32B 2307/582; B32B 2307/732;
B32B 2437/02

(86) International application number:
**PCT/DK2019/050413**

(87) International publication number:
**WO 2020/125904 (25.06.2020 Gazette 2020/26)**

(54) **A LEATHER-BASED FOOTWEAR**

SCHUHWERK AUF LEDERBASIS

CHAUSSURE À BASE DE CUIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2018  DK PA201870860**

(43) Date of publication of application:
**27.10.2021  Bulletin 2021/43**

(73) Proprietor: **Ecco Sko A/S
6261 Bredebro (DK)**

(72) Inventor: **MYTAROS, Panagiotis
6261 Bredebro (DK)**

(74) Representative: **Patentgruppen A/S
Aaboulevarden 31, 4th Floor
8000 Aarhus C (DK)**

(56) References cited:
**EP-A1- 0 932 703       EP-A1- 2 604 705
EP-A1- 3 332 660       EP-B1- 0 932 703
US-A1- 2016 192 741**

## Description

### Field of the invention

The invention relates to a leather footwear.

### Background of the invention

It is well known within the art of shoe making, that the properties of leather are extremely attractive in term important properties, such as visual appearance, durability, shape stability, comfort, etc.

It is however also well-known that leather as a material for a shoe is a relatively expensive base material. This is partially due to the fact that hides used for the making of leather by nature is varying in size, appearance and quality. Even though many industrial processes are optimized in many industries, including the leather and shoe making industry, there is still quite a lot manual work processes involved in selecting the hides for use in leather manufacturing, e.g. tanning and dyeing, but the manual work, although sometimes assisted by automatic processes also extents to the shoe making process, e.g. in terms of selecting and handling the different parts of leather, depending on the type and the properties of the individual leather hides.

EP 0932703 A1 discloses a method for reparing laminates of stretch fabric and stretchable leather.

### Summary of the invention

The invention is set out in the appended set of claims.

A leather laminate refers to a top-grain leather laminated to a reinforcing fabric and where the top grain, buffed or not, is facing away from the reinforcing fabric and in thus forming a part of the outer surface of the footwear. It should be noted that combination of a buffed top grain and a leather part obtained from typically less attractive parts of e.g. a cow hide is very attractive, as such parts conventionally are inferior in strength and in some instances also in relation to appearance.

It should be noted that the vamp and the quarter are leather parts requiring very particular strength properties in order to avoid that the footwear becomes deform during use. This, such footwear parts will benefit significantly from the reinforcing fabric and make it possible to provide a leather appearance of the outer part of the shoe solely defined by the appearance of the leather texture/leather appearance and relying on the strength/stiffness properties of the reinforcing fabric of the laminate.

In an embodiment of the invention, the footwear has a longitudinal direction (LD), wherein the leather of the laminate (600) has a stiffness orientation (SO) and wherein of the leather of at least one of the footwear defining part is inclined relatively to the longitudinal direction (LD).

An advantage of the invention is that is possible to use leather with at least one inclined leather part compared to conventional footwear manufacturing where the leather parts cannot be inclined due to their stiffness orientation. The advantage is that it is possible to have a variance in series of shoes and it is possible to choose the leather pieces based on a visual perception rather than physical properties.

The stiffness orientation may also be referred to as the direction of tightness and it is usually the case that a high degree of tightness in one direction will be associated to a relative high degree of stretch in the perpendicular.

The use of stiffness and strength may be used interchangeably throughout the present application unless otherwise noted.

It should be noted that inclination of the leather strength/stiffness with respect to the longitudinal direction would typically very to a certain degree depending on what part of the leather is being considered. It is generally understood that such inclination of the leather stiffness/strength should be considered with respect to usual and conventional selection criteria applied when nesting a hide with respect to vamp and/or quarters. In other words, the inclination of strength/stiffness orientation (SO) would according to a preferred definition of the invention be determined as the inclination between a conventionally nested vamp and/quarter and the inclination of the leather of the leather laminate according to the provisions of the present invention.

In an embodiment of the invention, the inclination of the stiffness orientation (SO) relative to the longitudinal direction of the footwear more than 20 degrees, such as substantially 45 degrees, such as substantially 60 degrees, such as substantially 75 degrees, such as substantially 90 degrees.

In an embodiment of the invention, the stiffness orientation (SO) is defined with reference to the stiffness orientation of the same leather of the originating tanned hide prior to processing of the thickness of the leather and lamination to the reinforcing fabric.

In an embodiment of the invention, the leather of the vamp and/or the quarters have a stiffness orientation prior to lamination and prior to thickness reduction into a thickness which is less than 1.5 mm, and wherein the stiffness orientation (SO) if the inventive vamps and quarters is inclined with respect to conventionally nested leather vamps and/or quarters

In an embodiment of the invention the above-mentioned inclination of stiffness orientation between a conventionally nested quarter and/or vamp and a corresponding inventive vamp or quarter is more than 20 degrees, such as substantially 45 degrees, such as substantially 60 degrees, such as substantially 75 degrees, such as substantially 90 degrees.

The determination of the inclination may be determined on the basis of a gradient of the longitudinal stiffness orientation of a conventional vamp and an inventive vamp or the longitudinal stiffness orientation of a conventional quarter and an inventive quarter. Other determinations may of course be applied within the scope of the invention. The important matter is that the leather may now be freely used without such complicated conventional consideration applied during nesting/cutting.

The stiffness of the leather layer applied in a shoe part, e.g. vamp, will conventionally be higher in one direction of the leather part. According to the provisions of the invention, such a leather part of e.g. a vamp formed by the leather composite laminate may be relatively freely mounted in a footwear such as a shoe or a boot with little or no consideration to strength and/or strength while mainly considering the textural appearance. This will also have the impact that leather may be cut in other directions and at other locations of a leather hide, while still maintaining a light and flexible laminate. This means that e.g. a vamp may now be cut from other parts than the back of e.g. a cow hide while still maintaining an attractive appearance.

It is also noted that e.g. leg or belly portions of a cow hide have been conventionally avoided completely e.g. for vamp use due to inferior mechanical stress, unless complex, expensive and appearance compromising measures have been applied. It is now possible within the scope of the invention to gain the benefits of such a leather region in a shoe parts, where such an application has been unattractive for purposes such as costs, appearance and/weight.

It is also noted that it is now possible to consider not only other parts of a hide region. It is also possible to ignore the complex directions of a hide and it is therefore possible to optimize the nesting and cutting of a shoe parts from a hide. Allowing such slack of concern in relation to direction of stiffness allows less waste of leather and optimum cutting of the leather hide.

It is also noted that the combination of leather, adhesive and reinforcing fabric in the composite laminate when applied in footwear features shape stability comparable or sometimes even better than leather and much better than textile. Thus, as last may define footwear shaping better than typical textiles. In particular when considering that the strength properties are highly directional in such leather.

It is also noted that the obtainable leather laminate is extremely attractive in terms of user experience as the leather footwear may now be provided even with shoe parts such as a vamp made of the inventive leather laminate, thereby offering the option of a lightweight footwear which is relatively shape-stable, light-weight, high breathability and great visual appearance.

In an embodiment of the invention, the footwear has a longitudinal direction (LD), wherein the leather of the laminate (600) has a stiffness orientation (SO) prior to thickness-processing and lamination and wherein said stiffness orientation when related to a corresponding at least one of the footwear defining part is inclined relatively to the longitudinal direction (LD).

In an embodiment of the invention, said at least one of the at least two footwear defining parts (FDP) is formed by a leather laminate (LL) and wherein the at least one of the at least two footwear defining parts is a vamp.

In an embodiment of the invention, said at least one of the at least two footwear defining parts (FDP) is formed by a leather laminate (LL) and wherein the at least one of the at least two footwear defining parts is a quarter.

In an embodiment of the invention, the leather is tanned and extends in a X and Y direction.

In an embodiment of the invention, the leather laminate has a thickness of 0.4 to 0.6 mm.

In an embodiment of the invention, the leather laminate has a thickness of above 0.6 to 1.2 mm.

In an embodiment of the invention, the leather laminate has a thickness of above 1.2 to 2 mm.

In an embodiment of the invention, the leather laminate has a thickness of above 2.0 to 3 mm.

In an embodiment of the invention, the reinforcing fabric of the leather laminate has a thickness of below 0.1 mm.

In an embodiment of the invention the ultimate tensile strength of the reinforcing fabric is at least above 5 kN/m, such as at least above 10 kN/m or such as at least above 15 kN/m.

In an embodiment of the invention the elongation at break of the reinforcing fabric is less than 5%, such as less than 4%, or such as less than 3%.

In an embodiment of the invention the elongation at break of the reinforcing fabric is between 0.2% and 10%, such as between 2% and 8% such as between 3% and 6%

A relatively low elongation at break, combined with the high strength of the reinforcing fabric and the laminate, make it possible, even when applying a partly covering adhesive comprising vapor passages, to provide an attractive leather laminate which may be used even if the thickness of the leather layer has been reduced to a previously not obtainable low thickness. It should be noted that the leather of the laminate would risk undesired modification or breaks in the surface of the leather when reducing the thickness, e.g. in a laminate comprising a fabric possessing relatively high flexibility or low strength,

In an embodiment of the invention the tear strength of the reinforcing fabric is at least 25 N, such as at least 50 N, or such as at least 75 N.

The tensile strength of the reinforcing fabric is at least above 1GPa, such as at least above 1.5GPa, such as at least 2GPa, such as at least 2.5 GPa, such as at least 3GPa.

In an embodiment of the invention the tensile strength of the reinforcing fabric is between 1GPa and 5GPa, such as between 2.5GPa and 4GPa.

The application of an extremely high strength reinforcing fabric according to the above provisions of embodiments of the invention makes it possible to ensure that the surface of the leather of the leather laminate is durable and resistant to wear in use, in particular when the leather surface of the leather laminate is formed by the top-grain side.

It should generally be noted that tensile strength of the reinforcing fabric of the laminate, unless otherwise noted is generally referred to the reinforcing fabric alone and not referring to the strength when laminated.

In an embodiment of the invention the peel strength of the leather laminate is at least 0.3N/mm, such as at least 0.4N/mm, such as at least 0.5N/mm and wherein the peel strength is measured according to SATRA TM 401 with a SATRA STM 566 Tensile testing machine.

In an embodiment of the invention the peel strength of the leather laminate is between 0.3N/mm and 1.5 N/mm, such as between 0.4N/mm and 0.8 N/mm, such as between 0.4N/mm and 0.6 N/mm and wherein the peel strength is measured according to SATRA TM 401 with a SATRA STM 566 Tensile testing machine.

Unless otherwise mentioned, a SATRA STM 566 Tensile testing machine is applied for the peel strength test and the measurement is carried out according to the test method SATRA TM 401. The tested laminate samples have a length of 100mm and a width of 30mm. The laminate is separated or split in half of the length of the sample, i.e. up to about 50mm, while ensuring with a manual slight pull that the leather and reinforcing fabric is fully separated at the last part of the partially separated laminate parts around the half-length. The laminate is then coupled to the above-mentioned testing machine in the separated end of the sample, e.g. the reinforcing fabric, and then fixed to a stationery part at the non-separated part of the sample and the separation force required to split the laminate further is measured in N (Newton)

It is noted that the obtainable peel strength is much better than expected even when applying adhesive according to the provisions of the invention. The high peel strength thus expresses that the leather of the laminate, even under stress is strongly fixated to the laminate, thereby benefitting from the properties of the reinforcing fabric.

It should be noted that other ways of measuring peel strength highlighting different characteristics of the laminate may of course be applied within the scope of th invention. In the present context it is however believed that the applied method expresses a representative and reproducible measurement method.

In an embodiment of the invention the reinforcing fabric, the adhesive and the leather are compatible.

Compatibility in the present context means that the applied adhesive must be adapted for interact with each other to establish a durable bonding between the leather and the reinforcing fabric.

In an embodiment of the invention the leather layer (11) is obtained from top grain leather.

In an embodiment of the invention the flesh-side of the leather layer (11) is facing the reinforcing fabric (13) of the laminate composite.

The thickness of the leather laminate may e.g. be measured by a SATRE STD 483.

In an embodiment of the invention, the leather laminate has a thickness of 0.4 to 1.0 mm, such as 0.4 to 0.8mm, such as 0.5 to 0.7mm.

In an embodiment of the invention, the leather of the leather laminate is originating from a cow hide and wherein the leather is tanned.

In an embodiment of the invention, the leather of the leather laminate is tanned by means of tanning agents and wherein the tanning agent are based on chromium-based compounds or derivatives thereof.

In an embodiment of the invention, the leather layer of the leather laminate has a stiffness which is comparable in both X and Y direction of the leather layer, i.e. in the directions extending the leather layer.

An advantage of a leather laminate with a stiffness comparable in both X and Y direction is that the leather can be used and applied in any direction compared to leather that needs to be orientated specific depending of the application and fiber direction.

The stiffness of the leather layer applied in a shoe part, e.g. vamp, will conventionally be higher in one direction of the leather part. According to the provisions of the invention, such a leather part of e.g. a vamp formed by the leather composite laminate may be relatively freely mounted in a shoe with little or no consideration to strength and/or strength while mainly considering the textural appearance.

According to an advantageous embodiment of the invention, the stiffness has been modified prior to lamination, e.g. by reduction of thickness of the top grain. This reduction may advantageously result in a very attractive and durable appearance of the final laminated leather when applied in a footwear according to the provisions of the invention. The wear may be absorbed without spoiling the appearance of the footwear as the stiffness in both X and Y direction resembles each other enough to provide the above explained advantage.

In an embodiment of the invention, the difference in stiffness in the X and Y direction has been reduced prior to lamination by reducing thickness of the tanned un-laminated leather prior to lamination.

In an embodiment of the invention, the leather of the leather laminate is buffed.

By buffing the leather of the laminate, typically the top-grain side, and when laminating the buffed leather layer to a reinforcing fabric at the opposite side, i.e. the flesh-side, an extremely attractive leather laminate has been obtained when the buffed side is forming part of the outer surface of the footwear.

In an embodiment of the invention, the vamp of the footwear is formed by said leather laminate, and wherein the leather of the vamp is at least partly from the shoulder region of a leather hide.

In an embodiment of the invention, the leather of the vamp is at least partly from the shoulder region of a cow leather hide

In an embodiment of the invention, the vamp of the footwear is formed by said leather laminate, and wherein the leather of the vamp is at least partly from the leg region of a leather hide.

In an embodiment of the invention, the leather of the vamp is at least partly from the leg region of a cow leather hide.

In an embodiment of the invention, the vamp of the footwear is formed by said leather laminate, and wherein the leather of the vamp is at least partly from the belly region of a leather hide.

In an embodiment of the invention, the leather of the vamp is at least partly from the belly region of a cow leather hide.

In an embodiment of the invention, the quarter of the footwear is formed by said leather laminate, and wherein the leather of the quarter is at least partly from the shoulder region of a leather hide.

In an embodiment of the invention, the leather of the quarter is at least partly from the shoulder or belly region of a cow leather hide.

In an embodiment of the invention, the footwear is a shoe.

In an embodiment of the invention, the footwear is a boot.

In an embodiment of the invention, the upper part is attached to the sole part by means of gluing or injection molding.

In an embodiment of the invention, the leather of the leather laminate is originating from a cow hide and wherein the leather is tanned.

In an embodiment of the invention, the leather of the leather laminate comprises tanning agents in the amount of 3 to 15% by weight of the leather.

In an embodiment of the invention, the leather of the leather laminate comprises tanning agents in the amount of 7 to 15% by weight of the leather and wherein the tanning agents are vegetable tanning agents.

In an embodiment of the invention, the vegetable tanning agents are obtained from chestnut wood, quebracho wood, tara pods, catechu, chinese gallnut, turkish gallnut, gambier, myrobalan, oakwook, sumac, bark from yate and/or valonia oak.

In an embodiment of the invention, the leather of the leather laminate comprises tanning agents in the amount of 3 to 12% by weight of the leather and wherein the tanning agents includes chrome tanning agents.

In an embodiment of the invention, the chrome tanning agents includes chromium, chromium salts and/or derivatives thereof.

In an embodiment of the invention, the leather of the leather laminate comprises chrome tanning agent(s) in the amount of 1 to 7% by weight of the leather, such as 2 to 6% by weight of the leather such as 2 to 5% by weight of the leather.

The specific content of chrome tanning in the amount of 1 to 7% by weight of the leather, such as 2 to 5% by weight of the leather is in particular attractive in relation to the inventive leather laminate as this content of chrome in the leather of the laminate makes is possible to use heat-activated adhesive to attach the leather to the reinforcing fabric. It is moreover, and even more advantageous in applications where the leather as to be steamed e.g. for purposes of shaping etc. This may be further advantageous if the applied leather, with the specified amount of tanning agent, in particular the specified amount of chrome or chrome salt based tanning agent, is a top grain where the flesh side is attached to the reinforcing fabric.

In an embodiment of the invention, the chrome tanning agents includes chromium, chromium salts and/or derivatives thereof.

In an embodiment of the invention, the leather of the laminate is obtained from top grain leather and wherein the flesh side of the top grain leather is facing towards the reinforcing fabric.

In an embodiment of the invention, the leather of the laminate is obtained from top grain leather and wherein the flesh side of the top grain leather is facing towards the reinforcing fabric.

## The figures

The invention will be described in the following with reference to the drawings, where

fig. 1 illustrates some principle part of a footwear in accordance with the claimed invention,

fig. 2 illustrates a cross-section of a footwear in accordance with the claimed invention,

fig. 3 illustrates texture properties of a leather hide,

fig. 4 illustrate stretch properties of a leather hide,

fig. 5 illustrates optional variations in stretch for a specific illustrated shoe part,

fig. 6 illustrates a leather laminate in accordance with the claimed invention,

fig. 7 illustrate different shoe defining parts,

fig. 8 shows a convention constricted cutting technique of a cow hide.

**Detailed description**

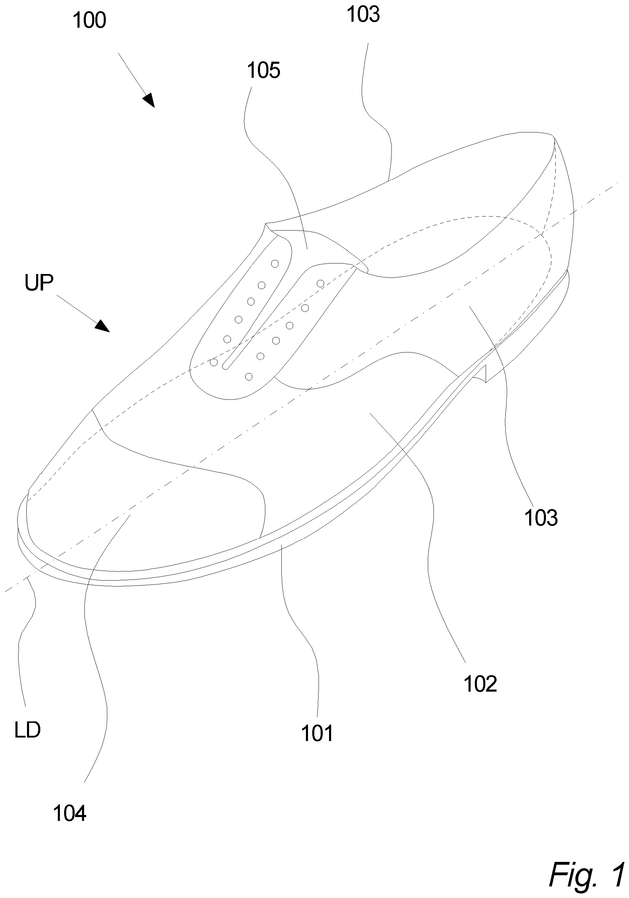

Fig. 1 illustrates an exemplary footwear in accordance with the claimed invention.

The exemplified footwear is a shoe 100. Other types of footwear may be relevant within the scope of the invention, such a boot. It should also be noted that shoes may be configured or manufactured in many different ways and be formed of different types of shoe-defining parts but still considered included in the invention as long as principle parts of the shoe, are made according to the provisions of the invention.

The illustrated shoe 100 comprises an upper part UP. The upper part comprises footwear defining parts such as a vamp 102 and tongue 105, two quarters 103 and a mudguard 104.

The shoe may of course comprise other not-shown features and parts and the shapes and configuration of the parts may be different. Most shoes comprise more than 15 or 20 shoe defining parts.

The upper part UP is attached to a sole 101 e.g. be adhesion of by injection molding.

The sole may comprise several parts and layers (not shown)

The shoe has an outer surface which is visible from the outside. The inventive outer surface to may e.g. refer to the vamp 102, the quarters 103 or the mudguard 104. These parts may have many different names within the art, but the present explanation with the associated drawings makes sense to a person skilled in the art, and the meaning of a vamp and a quarter will be functionally understood.

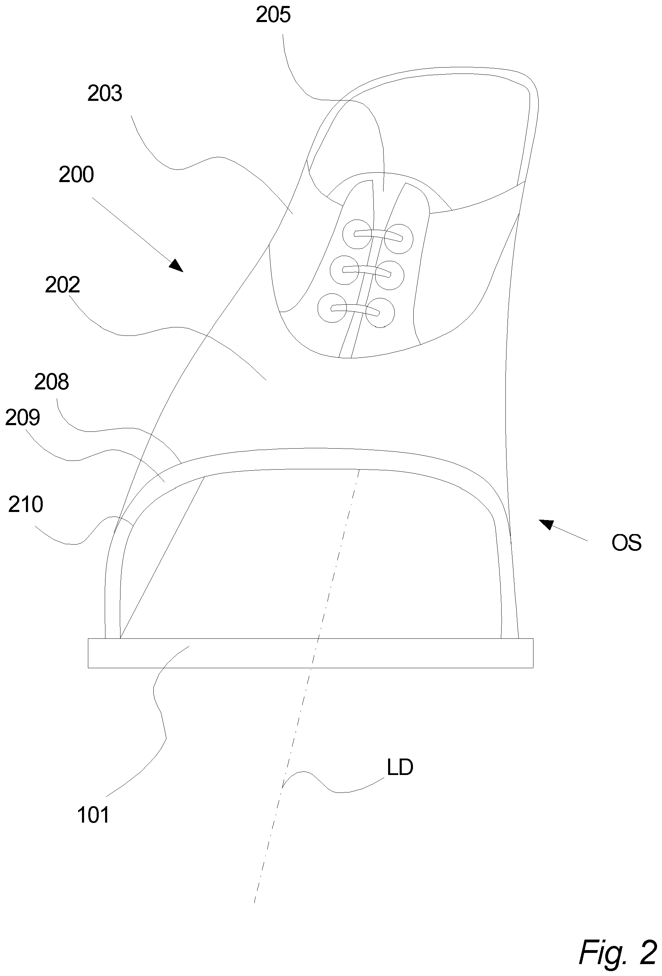

Fig. 2 illustrates a cross-section e.g. of the shoe of fig. 1, comprising a sole 201, a vamp 202, two quarters 203 and a tongue 205. The vamp 202 comprises two principle layers, a leather layer 208 adhered to a reinforcing fabric 210 by means of an adhesive 209.

The illustrated vamp 202 has an outer surface OS facing outwards, and the outer surface features the top grain side of the leather applied in the leather laminate whereas the non-visible parts, the flesh side of the leather of the laminate is facing toward the reinforcing fabric 210.

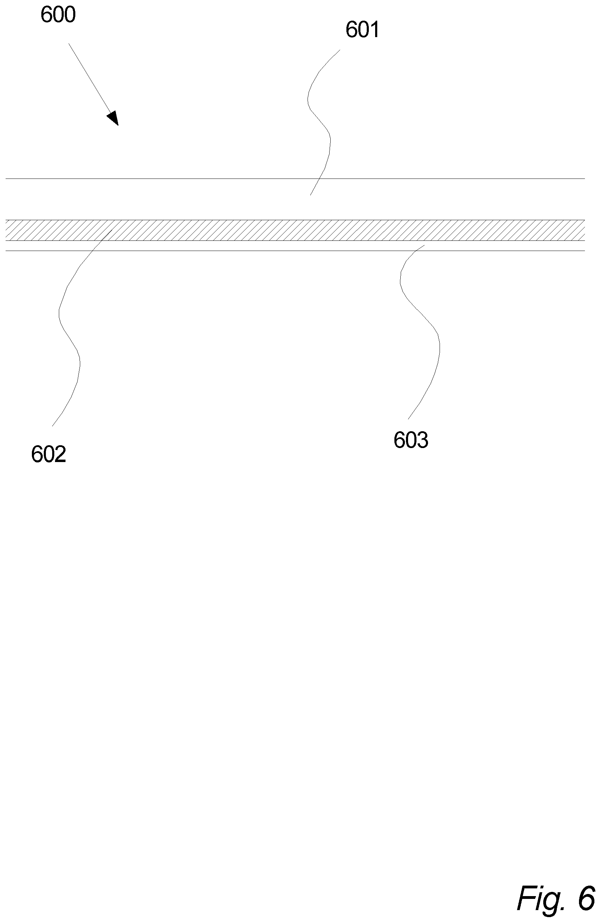

The vamp in the present embodiment of the invention is made of a leather laminate as disclosed and explained elsewhere in the application, e.g. in fig. 6.

The longitudinal direction of the shoe is illustrated by the axis LD. The advantageous orientation of the leather in the leather laminate with respect to the longitudinal direction will be described below.

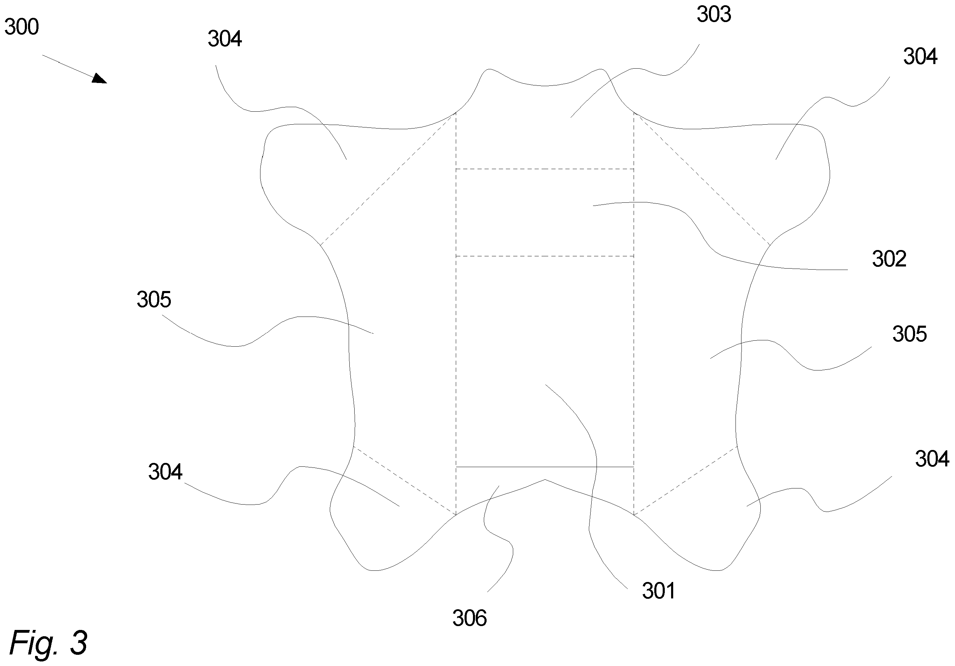

Fig. 3 further illustrates a general illustration of texture of leather material distribution in an exemplary cow hide 300. It should be noted that texture may vary significantly from leather hide to leather hide.

301 illustrates a part of the leather hide originating from the back of the cow. This part has a very attractive texture and may considered as having the best texture for some purposes. This part 301 of the hide may often be applied for vamps and quarters of shoes.

302 illustrates a part which corresponds somewhat to the part 301, a shoulder part, but the texture of this part of the hide is for some purposes regarded as having a texture which is somewhat less attractive than the part 301. This part may have some wrinkles but may be used for making tongues.

303 illustrates a part which generally considered as a poor texture. The part is from the head region of the hide.

304 illustrates a part which is also generally considered as having an inferior texture for many purposes. This part is from the leg part of the hide.

305 illustrates a part of the leather which in terms of texture is not as attractive as other parts of the hide. This part, originating from the belly, may be regarded as the poorest part of the hide in terms of texture.

306 illustrates the part of the leather originating from the butt part of the leather hide. This part 306 is not attractive for leather parts of the shoe which may be seen from the outside. The part 306 is typically used for linings of a shoe.

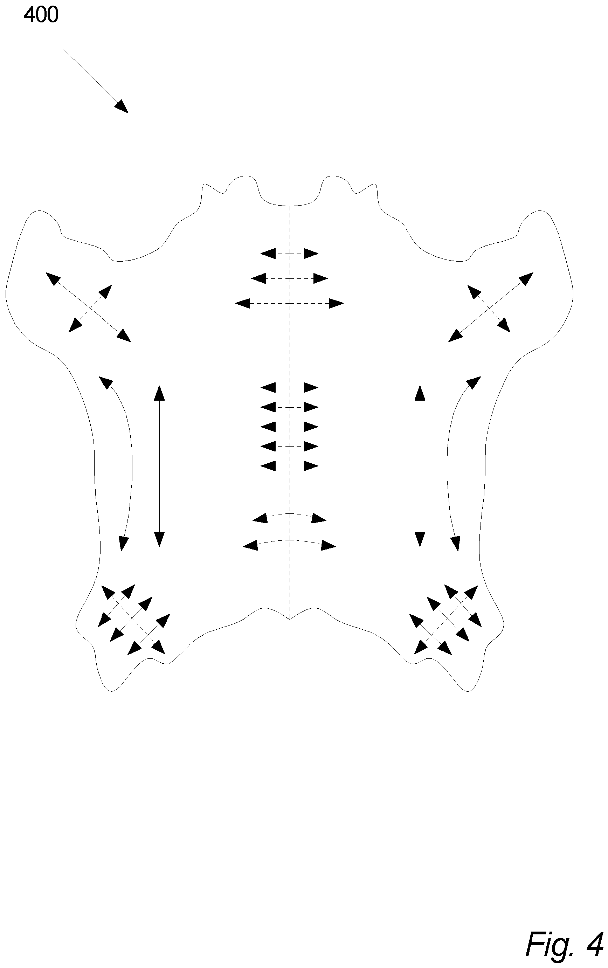

Fig. 4 illustrates the direction of pull on stretch of a tanned cow hide.

Referring to the parts explained with reference to fig.3 it can be seen that the stretch directions indicated with arrows are varying significantly depending on which part of the hide is under consideration.

It is also painfully clear that the direction of stretch/stiffness is not necessarily coordinated well with the texture.

Besides that, it should also be noted that the elasticity and probably most importantly, the plasticity also varies depending on the location on the leather.

As it will be described further below, these non-uniformities of the tanned leather hide are significant and imposes significant restrictions on how to cut out shoe defining parts from the hide in the prior art. These restrictions refer e.g. to direction of stiffness of the most important footwear defining parts such as the vamp or a vamp part relative to the longitudinal direction of a footwear.

It is thus clear from the above that stretch properties of the shoes amongst several other properties of the hide impose significant restriction in relation to which leather parts of the hide may be used for which part of a shoe. The below texture properties are generally referring to the full or top grain appearance.

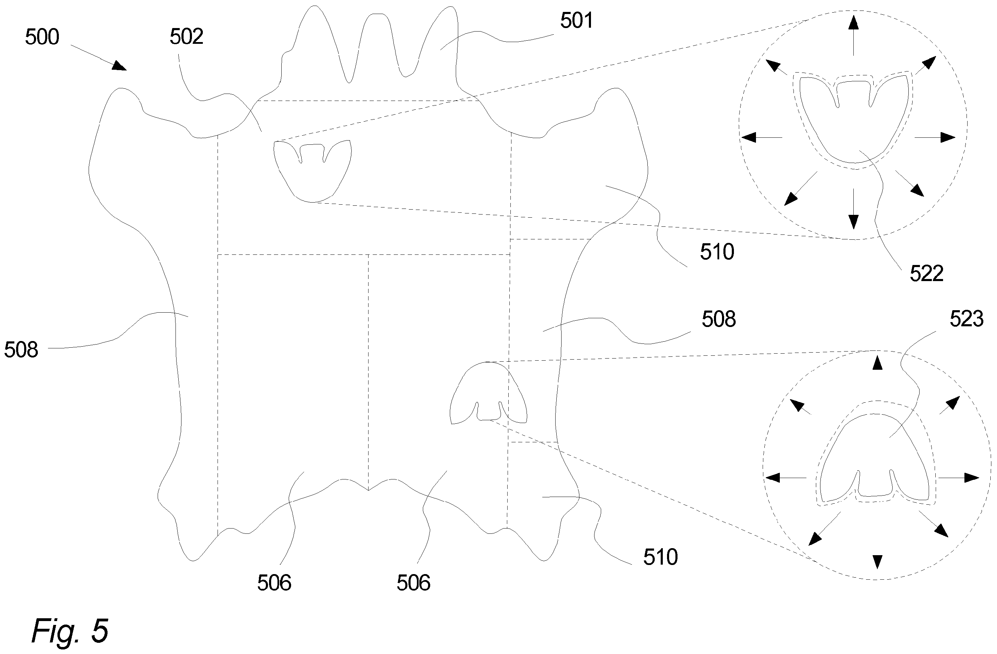

Referring now to Fig. 5, a representational view of a natural leather material used for manufacturing articles of footwear is shown. In this view, the natural leather material is a cowhide 500. Cowhide 500 can be divided into a plurality of different regions that correspond to the various parts of the animal from which the hide was obtained.

For example, in Fig. 5, cowhide 500 can include a head region 503, a shoulder region 503, a hind region 506, a belly region 508, and/or a shank region 510. Each region of cowhide 500 may exhibit varying degrees or amounts of stretch that is an inherent property of the natural leather from that region of cowhide 500. In any case, material from belly region 508 can exhibit a greater degree of natural stretch property or stretchiness than material from shoulder region 502 or hind region 506. A single piece of natural leather material, such as cowhide 500, is typically used to manufacture a plurality of articles of footwear by cutting out a plurality of upper pattern, i.e. for footwear defining parts, from across the different region of cowhide 500. Accordingly, depending on the region of cowhide 500 that each upper pattern is obtained from to manufacture an article of footwear, the upper and/or vamp of different articles of footwear can undergo varying degrees or amounts of stretch from one another. For example, as shown in Fig. 5, a first upper pattern 520, e.g. a vamp can be obtained from shoulder region 502 of cowhide 500 and a second upper pattern 523 can be obtained from a portion of hind region 506 and a portion of belly region 508. In this example, because substantially all of first upper pattern 520 is obtained from the same region (e.g., shoulder portion 502), first upper pattern 520.

A second upper pattern 523 is obtained from a portion of hind region 506 and a portion of belly region 508. As a result, different portions of second upper pattern 523 associated with the different regions of cowhide 500 may exhibit varying amounts of stretch property so that second upper pattern 523 does not exhibit a uniform overall stretch property through the material. Accordingly, when force is applied to second upper pattern 523 to stretch or pull the material into a stretched configuration, the material of second upper pattern 523 at a first end stretches differently than the material of second upper pattern 523 at a second end that was obtained from a different region of cowhide 500.

In addition, due to the natural variations and imperfections in natural leather or suede materials, even different upper patterns obtained from the same region of cowhide 500 may exhibit varying degrees or amounts of stretch property from any upper pattern to another and/or across each individual upper pattern itself.

A further challenge is that leather stretch in conventional shoes may simply result in deformity of the shoe after wear if the orientation of the stretch is wrong.

Considering that skin stretch varies according to the particular area of the body of the animal as illustrated above. A shoe component must conventionally always be cut so that the direction of stretch follows the width of the shoe. This is to avoid cutting the stretch direction alongside the piece. It must be tight in the heel-to-toe direction, otherwise the use of the leather should will make the shoe irreversibly losing its shape.

It is of course possible to compensate for strength issues by the application of e.g. reinforcing structures or stitching, but this may to a large degree result in a different visual appearance and thereby affect the designer's ability to design according to wishes.

It is therefore clear that the real-life leather obtained e.g. from cows, but also from other animals, due to the physical construction of the originating skin possesses very different orientation of strength depending on where on the hide the leather part is originating from and also depends highly on how the leather is oriented in relation to stiffness/-strength. It is in particular noted that some parts of the footwear, e.g. the vamp and the quarters, require a high stiffness/strength and that this strength is oriented in the right direction of the footwear, typically in the longitudinal direction of the footwear.

Fig. 6 illustrates a general principle of cross section of a leather laminate 600 to be applied in a footwear, such as a shoe or a boot, according to the provisions of the invention.

The illustrated leather laminate 600 comprises a leather layer 601 bonded to a reinforcing fabric 603 by means of an adhesive 602. The outer surface, when applied in a footwear, is shown with arrow OS.

It should be noted that the present laminate is characterized by these three important layers.

Thus, the reinforcing fabric 603 is characterized by strength along the directions of the leather layer to which it is bonded. The reinforcing fabric 603 has a strength which is substantially higher than the leather of the leather layer 601 in the direction of the layers. The reinforcing fabric may possess different properties in terms of water vapor permeability (WVP) is the measurement of the time rate of water vapor transmission through unit area of flat material of unit thickness induced by unit vapor pressure difference between two specific surfaces, under specified temperature and humidity conditions. **In** some embodiments of the invention, e.g. where a water proof shoe, boot or other footwear is desired, the reinforcing fabric may have a low water vapor permeability, e.g. below 5 mg/cm2/hour.

In case of a sports shoe or the like, water vapor permeability should e.g. be above 5 mg/cm2/hour. In such case, a water vapor permeability of all three layers, or at least the two layers, the reinforcing fabric 603 and the adhesive should together facilitate an overall acceptable water vapor permeability. Reinforcing fabrics having high water vapor permeability are known within the art. Care should however be taken when applying adhesive between the two layers, the reinforcing fabric 603 and the leather layer 601 as the resulting matrix of adhesive between the layer 603 and 601 should not effectively seal the laminate. This may e.g. be avoided when applying adhesive in an adhesive pattern with holes or openings facilitating transmission of vapor. In other words, it may in such a situation be advantageous to have contacting areas between the layers 601 and 603 where there is no adhesive blocking optional vapor transmission.

The adhesive the be applied within the scope of the invention must ensure a safe and reliable bonding or adhesion between the leather layer and the reinforcing fabric thereby ensuring the complete laminate has the overall desired strength.

The adhesive can in principle be any adhesive capable of bonding leather and the reinforcing fabric at the same time. Different aspects of such an adhesive and the method of applying it will be discussed below. The specific use will give directions to the used adhesive and lamination method.

Typically, the adhesive is used in combination with a hardener to aid in the bonding. Suitable levels of hardener are up to 20%, more typically up to 10%, for instance 95% adhesive, 5% hardener.

Specific adhesives and hardeners that have been used in combination include Helmitin® DS/17, available from Helmitin Adhesives, together with Swift Hardener 9538 Blue. This combination can be applied by spraying on to the leather.

As leather is absorbent, the adhesive typically soaks into the leather after it has been applied which provides a stronger bond.

The adhesive is applied at a suitable level to ensure the reinforcing fabric forms a strong bond to the leather. Typical levels if applying by spray are around 15 to 60 g/m2, e.g. around 20-40 g/m2. However, these levels are dependent on the concentration of the adhesive in the solution. It would nevertheless be within the ability of the skilled person to adjust the level of adhesive accordingly to achieve the desired bonding strength to avoid delamination during use.

The laminating step typically comprises the following steps:

- applying an adhesive on the first side of the piece of leather; and
- contacting a reinforcing fabric with the adhesive.

The applying step may be by any means, including spraying, brushing or with rollers. However, spray adhesives can lead to clogging of the spray gun nozzle, and so typically the adhesive is applied by a roller-coater in commercial production.

The adhesive layer on the leather can be contacted with the reinforcing fabric immediately after application. However, typically bonding is better if the adhesive is allowed some time to soak into the leather, for example a soaking step of from 5 seconds to 1 hour, more typically 1 minute to 45 minutes, e.g. 5 minutes to 30 minutes.

The adhesive can also benefit from such a curing step as it can partially dry, improving its tackiness and capability to bond to the reinforcing fabric. However, if the delay between applying the adhesive and contacting the reinforcing fabric is too long, the adhesive may no longer be capable of forming a strong bond with the reinforcing fabric. Consequently, it is desirable to contact the reinforcing fabric while the adhesive retains some tackiness.

In order maintain a successful bond throughout the remaining processes the adhesive may require heat and/or force to aid in bonding the leather and reinforcing fabric. Therefore, the method optionally includes a bonding step after the reinforcing fabric is contacted with the adhesive.

Typically, bonding is achieved by passing the laminate through a roller (e.g. a rotopress), such as a heated roller. So as not to damage the second side of the leather, suitably at least of the rollers is compressible, such as a felt roller, a rubber roller, a foam roller or the like.

If the laminate is heated, the temperature should not be too high or else the reinforcing material may become structurally compromised or the leather may discolour. Suitable maximum temperatures are 25°C below the melting point of the high strength fibre or 115°C, whichever is lower.

If the high strength fibres can tolerate higher temperatures, it may be possible to form the laminate with a hot melt adhesive from a multilayer structure comprising the reinforcing fabric, hot melt adhesive and leather, such that heat and pressure are applied to allow the adhesive to melt and flow forming the bond between the reinforcing fabric and leather. Such a hot melt adhesive could be included in the laminate by any means, including as part of the reinforcing fabric, as a separate layer, or applied to the leather. However, if forming the leather laminate in this way, care must be taken not to expose the leather to overly high temperatures particularly for extended periods, in case the leather becomes discoloured.

Possible processing steps in the lamination step/adhesion step of the method therefore include:

- applying an adhesive to the first side of the piece of leather, for example as a spray;
- optionally allowing the adhesive to soak into the leather, for example in a curing step of from 1 to 30 minutes;
- contacting a reinforcing fabric with the adhesive to form a multilayer structure comprising a layer of the reinforcing fabric, a layer of the adhesive and the leather;
- optionally applying heat and/or pressure to the multilayer structure, for example by passing the multilayer structure through the nip of a heated roller; and
- optionally allowing the adhesive to dry, for example in a drying step of at least 8 hours.

The multilayer structure preferably comprises the reinforcing fabric in contact with the adhesive, with said adhesive also being in contact with the first side of the leather (i.e. there are not intervening layers between the reinforcing fabric and the adhesive or the adhesive and the first side of the leather).

The lamination step may optionally be succeeded by a milling process of the laminate. The milling should only be carried out once the adhesive has fully dried and properly bonded to the reinforcing fabric. Consequently, there is typically a drying step of at least 10 minutes prior to roll milling, more typically at least 1 hour, more typically at least 4 hours, e.g. at least 8 hours. Often, the laminates are left overnight to ensure the adhesive is fully dried prior to milling.

The milling of the finished laminate may at the same time provide very attractive leather appearance of the top-grain facing away from the reinforcing fabric with a very special texture and also provided softness to the leather laminate without compromising the footwear application.

The reinforcing fabric 603 provides strength to the laminate, allowing the leather layer to be thin and the overall laminate to be flexible. The reinforcing fabric is therefore relatively thin and has high tensile strength, high tear strength and low elongation at break.

Suitably, the basis weight for the reinforcing fabric is below 150 g/m2, typically below 100 g/m2, more typically below 75 g/m2, and most typically below 60 g/m2.

A suitable method for measuring the basis weight of the reinforcing fabric is ASTM D3776.

Suitably, the ultimate tensile strength (breaking strength) of the reinforcing fabric is above 5 kN/m, more typically above 10 kN/m, or even above 15 kN/m.

The ultimate tensile strength expressed in kN/m is the pulling force required to break a 1 m wide sample of the material. A suitable test for measuring the ultimate tensile strength of the reinforcing fabric is ISO 3376 : 2011. An alternative test specifically adapted for testing tensile properties of polymer matrix composites which could be used is ASTM D3039.

Examples of commercially available reinforcing fabrics from Dyneema applicable for use in embodiments of the present invention have tensile strengths of between 3GPa and 4GPa, such as 3.5GPa. Other manufacturers may offer applicable reinforcement fabrics having tensile strengths of between 2.5GPa and 3.5GPa

Suitably, the elongation at break of the reinforcing material (i.e. the elongation of the fabric when stretched to its breaking point) is less than 5%, typically less than 4%, or even less than 3%.

A suitable test for measuring the elongation at break is ISO3376:2011. An alternative test specifically adapted for testing the elongation properties of polymer matrix composites which could be used is ASTM D3039.

Suitably, the tear strength of the reinforcing material is above 25 N, typically above 50 N, or even above 75 N.

A suitable method for measuring the tear strength of the reinforcing material is ISO 3377-1:2011. An alternative test specifically adapted for testing the tear strength of polymer matrix composites which could be used is Mil-C-21189 10.2.4.

It will be clear from the above characteristics that the reinforcing fabric is very low basis weight (and hence typically very thin) yet typically has very high tensile strength and tear strength. Suitable materials that fulfil these requirements include fabrics which include at least one layer comprising high strength fibres.

By "high strength fibre" is meant a fibre having an ultimate tensile strength of (typically) above 1500 MPa. A suitable test for measuring the ultimate tensile strength of the fibre is ASTM D3822.

Typical high strength fibres include carbon fibres or high tensile strength polymeric fibres, with suitable high tensile strength polymeric fibres including polyethylene (particularly UHMWPE), polyaramid, polybenzoxazole, and polyaromatic esters.

Suitable high strength fibres that can be used in the reinforcing fabric therefore include carbon fibre, UHMWPE fibres such as Dyneema® available from DSM or Spectra® available from Honeywell; polyaramid fibres such as Kevlar®

available from DuPont; polybenzoxazole fibres such as Zylon® available from Toyobo; and polyaromatic esters such as Vectran® available from Kuararay, Inc..

In this context, UHMWPE is "ultra-high molecular weight polyethylene", which is sometimes also referred to as high-modulus polyethylene (HMPE) or high-performance polyethylene (HPPE). UHMWPE is typically characterised by having an intrinsic velocity of at least 4 dl/g, desirably at least 8 dl/g. Generally, the intrinsic viscosity is less than 50 dl/g, typically less than 40 dl/g.

A suitable methodology for measuring intrinsic viscosity is ASTM D1601-2004 (at 135°C in decalin, dissolution time 16 hours, with DBPC as an anti-oxidant in an amount of 2 g/l solution, by extrapolating the viscosity as measured at different concentrations to zero concentration).

The at least one layer in the reinforcing fabric comprising the high strength fibres may be woven or nonwoven. However, in order to benefit from the strength properties of the fibres, typically the at least one layer will contain the high strength fibres in an oriented fashion, such as woven (including uniweave), monodirectional or multidirectional fabrics.

Typically, the reinforcing fabric will comprise at least one layer having parallel high strength fibres. Said parallel high strength fibres may optionally be embedded in a resin matrix.

By "monodirectional fabrics" and "multidirectional fabrics" is meant fabrics formed with layers of oriented fibres embedded in a resin matrix, with multidirectional fabrics typically containing several layers of oriented fibres arranged orthogonally to one another (e.g. oriented at 0° and 90°, or at 0°, 45°, 90° and 135°), with optionally each layer being bound together by resin, or all the oriented layers being embedded in a continuous resin matrix.

The reinforcing fabric may be a multilayer composite which contains further layers in addition to the layers comprising the high strength fibres. For instance, nonwoven fabrics may be included on one or both sides of reinforcing fabric, in addition to the at least one layer comprising the high strength fibres. This can improve the feel of the reinforcing fabric.

A particularly suitable reinforcing fabric is Dyneema® CTH2M2 available from DSM, which comprises nonwoven polyester fibre layers on either side of a multidirectional fabric containing 0°/90° oriented layers of Dyneema® fibres. The tensile strength of the fabric is about 16 kN/m, the basis weight is 36 g/m2, the tear strength is 80 N and the elongation at break is 2.5%.

Another suitable reinforcing fabric is Dyneema® CTM2HBH2 also available from DSM, which comprises nonwoven polyester fibre layers on either side of a multidirectional fabric containing 0°/45°/90°/135° oriented layers of Dyneema® fibres. The tensile strength of the fabric is about 18 kN/m, the basis weight is 56 g/m2, the tear strength is 463 N and the elongation at break is 2.5%.

The reinforcing fabric may also possess different properties with respect to water vapor permeability and should be chosen to match the desired properties of the footwear.

The level of adhesive penetration is thought to be significant as, once dried, the adhesive works in combination with the reinforcing fabric effectively fixing the first side of the piece of leather. If the adhesive penetration is through the entire leather sample, then the adhesive may prevent the leather expanding due to the water and hence prevent the surface texture developing. This is particularly the case when the piece of leather is very thin.

As a consequence, the penetration of the adhesive into the piece of leather is typically less than 50%, desirably less than 25%.

By "penetration" is meant how far the adhesive soaks through the piece of leather as a percentage of the distance from the first side (where the adhesive is applied) to the second side.

Further processing steps may be carried out following dry milling, for instance resizing (e.g. cutting into blanks ready for assembly into an article), and forming a multicomponent article comprising the leather laminate (for instance a shoe, bag, luggage, clothing, furniture, car trim or the like).

The present disclosure also relates to a leather laminate formed by the method described herein.

The present disclosure also relates to a leather laminate comprising a reinforcing fabric bonded to a leather layer which has undergone exposure to water and dry milling, said reinforcing fabric comprising high strength fibres, particularly which has undergone step iii' or step iii" of the method described herein.

Typically, the leather laminate of the disclosure comprises a reinforcing fabric bonded to a leather layer with an adhesive.

The leather laminate of the disclosure is characterised by a random (or non-repetitive) pebbled grain-like structure on the leather surface. Preferably, the reinforcing layer of the laminate also has a random (or non-repetitive) pebbled grain-like structure.

The structure may also be described as a shrunken, grain-like structure.

Typically, the pebbled grain-like structure is reduced when the laminate is stretched, for instance during bending.

By "grain-like structure" or "pebbled grain-like structure" is meant a surface structure made up of a continuous 2-D network of low features (cracks) that surround raised features (grains), wherein the distance between the grains (i.e. the distance across the cracks) is small compared to the distance across the grains (typically the distance across the grains is at least three times the width of the cracks, for example when 10 grain and crack pairs are measured). In this way, when viewed from above the cracks (i.e. the low points in the surface structure) are similar to grain boundaries and the grains (i.e. the raised features) are similar to grains in a sample of metal.

This type of surface texture on leather is typically called pebbled leather in the art.

The milling process used to form the laminate of the disclosure provides a combination of mechanical working as well as swelling caused by the water, which means the grains formed on the surface are uniquely shaped and typically have a low aspect ratio, such as below 5, more typically below 3 or even below 2.

By "uniquely shaped" is meant that each of the grain structures has a shape which is usually different from the other grains that surround it, with any similarity between two grains in the surface as a whole being a coincidence which does not give rise to a discernible repeating pattern.

By "aspect ratio" is meant the ratio of the largest dimension of the grain to the smallest dimension, when measured from above. When measuring the aspect ratio, typically 10 grains are chosen from the sample.

The size of the grains (i.e. both the width and vertical height) can be controlled by a number of factors, including the thickness and type of leather used, and the milling conditions.

Nevertheless, by way of guidance, the grain size is typically from 0.5 to 5 mm, more desirably from 0.5 to 3 mm or even from 1 to 2 mm.

A suitable way to determine the grain size is by averaging the largest dimension of typically 10 grains chosen from the sample.

The grain height is typically from 100 to 500 microns, more typically from 200 to 400 microns.

By "random" (or "non-repeating") is meant that the pebbled grain-like structure does not repeat over any part of the surface of the leather layer, such that any two 1 cm2 sample areas taken from different parts of the surface are not the same.

It is worth noting that the grain-like structure of the leather surface and the grain-like structure of the reinforcing layer are not necessarily the same. They may have different grain sizes and/or grain heights, as well as different grain morphologies.

By "reduced during bending" is meant that the following relationship is satisfied:

$\Delta H \geq 75\%$ when bending to a bend radius of R, wherein

$$R = 5 * t \text{ when } t > 1mm,$$

and

$$R = 5 \text{ mm, when } t \leq 1mm,$$

t is the thickness in mm of the combined reinforcing layer and leather layer in the laminate (as measured by ASTM D1814 - 70(2015)), and

$$\Delta H = 100*(1- ((H\_initial-H\_final)/H\_initial)$$

Hinitial is the vertical difference between the high points of the grains and low points of the cracks separating grains when the laminate is flat, and
Hfinal is the vertical difference between the high points of the grains and low points of the cracks separating grains when the laminate is bent with a bend radius of R.

As noted, t is the thickness in mm of the combined reinforcing layer and leather layer in the laminate. **In** practice, it is the leather layer that is important. However, this cannot easily be separated from the reinforcing layer without risk of damage to the leather. Therefore, for the purposes of this test, the thickness of the laminate including the reinforcing layer is taken. In practice, the reinforcing layer is typically very thin in comparison to the leather layer, so the difference in thickness between the overall laminate and leather layer is often barely measurable using the SATRA test. However, any backing layers connected to the reinforcing layer (such as foam layers or other support layers) should be disregarded.

Hinitial and Hfinal represent the depth of the grain structure in the surface of the leather when the laminate is flat and when bent to a bend radius R. The value $\Delta H$ therefore represents the change in texturing of the surface as the laminate is bent.

Preferably:

$$\Delta H \geq 90\%$$

More preferably:

$$\Delta H \geq 95\%$$

Being a natural material, leather itself is relatively stretchy. However, when bonded to the high strength fabric after step ii, the laminate effectively loses its stretchiness compared to natural leather.

Thus, the non-bonded leather layer typically has an elongation at break of at least 10% without tearing, typically even more for instance at least 15%.

In the laminate prior to dry milling, the leather is restricted by the high strength fabric, and will typically have an elongation at break of less than 5%, more typically less than 4%, or even less than 3%.

The pebbled grain-like structure is primarily formed from the reduction in size of the laminate during dry milling. This dimensional change manifests causes the high strength fabric to crinkle up, meaning that after step iii, the laminate will typically have an elongation at break of by at least 5%, more typically at least 6%, or at least 7 % or even at least 8%.

Stretching the laminate in this way will of course reduce the surface texture, as in part the grains arise due to the crinkling that occurs during the contraction that happens when dry milling. This is in contrast to artificially embossed leathers, which often retain their surface structure even when stretched or bent. The resultant surface texture of the leather of the disclosure therefore has a very natural appearance when formed into shaped articles and during use.

Thus, viewed in one way the leather laminate of the disclosure comprises a reinforcing fabric bonded to a leather layer, said reinforcing fabric comprising high strength fibres, wherein the surface of the leather layer and the surface of the reinforcing fabric each have a non-uniform, pebbled grain-like structure.

The leather laminate of the disclosure may also be viewed as comprising a reinforcing fabric bonded to a leather layer, said reinforcing fabric comprising high strength fibres and having an elongation at break (i.e. the elongation at break of the reinforcing layer alone) of less than 5% (or less than 4% or even less than 3%), wherein the leather laminate has an elongation at break of more than 5% (or more than 6 or more than 7% or even more than 8%).

Typically, one would expect the elongation at break of a multicomponent laminate to be equal to the elongation at break of the least elongatable layer. However, the elongation of break of the leather laminate is higher than the reinforcing fabric because the laminate has been shrunk to create the pebbled, grain-like structure.

Desirably, the leather layer in the laminate is thin, with the overall laminate typically having a thickness in line with the thicknesses of the leather layer set out in Step i. above, namely typically from 0.1 to 4 mm thick, or from 0.2 to 3.2 mm thick, or from 0.3 to 2 mm thick, or from 0.3 to 1.6 mm, or from 0.3 to 1.2 mm, or even from 0.3 to 0.8 mm.

The thickness of leather laminate can be calculated using SATRA TM 1:2004.

Desirably, the leather layer in the leather laminate of the disclosure derives from top grain leather.

Desirably, the leather layer in the leather laminate derives from nubuck leather. Desirably, the nubuck leather has a velvet-like surface.

Desirably, the flesh side of the leather is bonded to the reinforcing layer in the leather laminate of the disclosure. In this way, the skin side of the laminate has the grain-like surface texture.

The present disclosure also relates to a personal item comprising, or made from, the leather laminate disclosed herein. In particular, the personal item may be footwear, an item of clothing, or a container.

Preferably, the disclosure relates to footwear comprising, or made from, the leather laminate disclosed herein.

Suitable footwear that could comprise, or be made from, the leather laminate includes work boots, sport shoes, casual shoes or formal shoes.

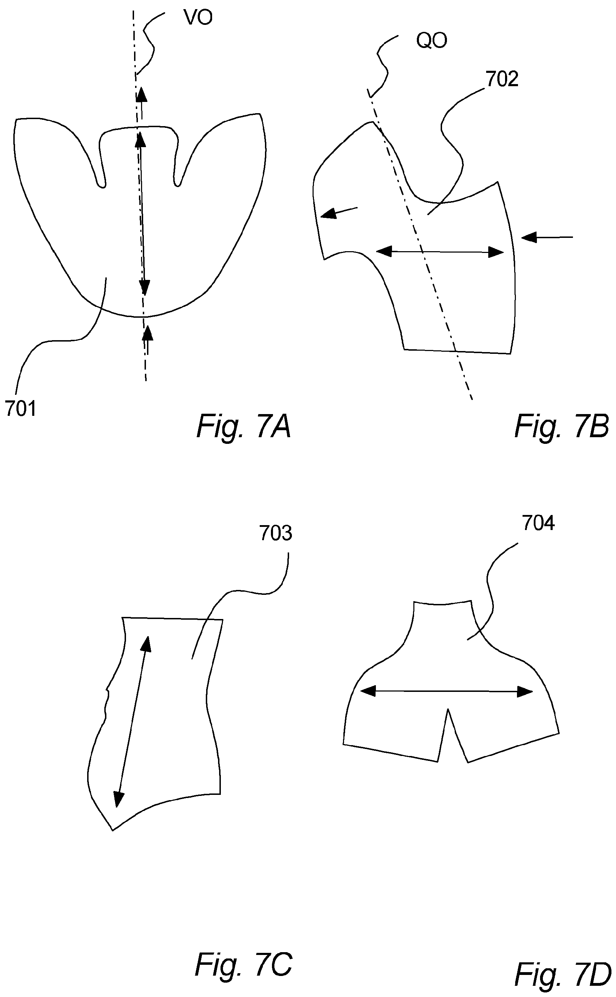

Fig. 7A - 7D illustrate four possible footwear parts made according to an embodiment of the invention.

Fig. 7A shows a vamp 701, fig. 7B shows a quarter 702, fig. 7C shows a boot leg 703 and fig. 7D shoes a counter 704.

The line VO shows the vamp orientation.

The line QO shows the quarter orientation.

The arrows at the footwear parts; vamp, quarter and counter, are showing how the strength orientation/stiffness orientation should preferably be performed and inclined according conventional nesting/cutting.

It should be noted that the terminology applied when characterizing parts of footwear may vary, the above used terminology is used commonly among skilled persons within the art.

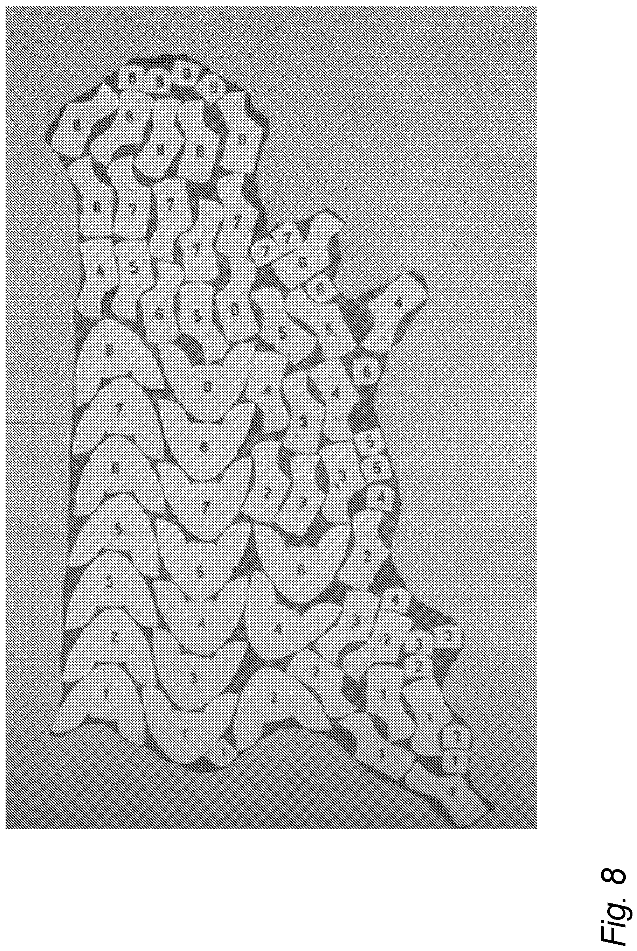

Fig. 8 illustrates a conventional exemplary way of nesting a tanned cow/calf hide 800. It is clear the different footwear defining parts are typically cut from different location of the hide 800. It is also clear that e.g. the vamp is restricted to come from certain parts of the hide and the direction is also restricted to follow the directions of stiffness and avoid stretch in the lengthwise direction of the final footwear to be made.

The laminate of fig. 6 may be used in a different way, allowing other parts of the hide 600 to be used for e.g. the vamp and the direction may be modified, for some purposes freely. This inventive technique may also provide for cutting leather parts of the same shoe/footwear and also for pairs of shoe/footwear of the same region of the leather hide. This is attractive as texture-matching and/or appearance-matching (such as color) may depend significantly on from which part of the hide footwear defining parts is cut.

It should be noted that the present use of leather laminate is still suitable for leather manufacture in terms of 3D form stability, even if relatively thin layers of the top or full grain leather is applied. The 3D form stability referred to in the present context may also be understood as a shape stability, and where the shape in question is the shape obtained after forming the upper part of the shoe by means of a last used during manufacture of the shoe. In other words, the shape is referring to the shape of the leather upper part obtained and initially defined by the last, e.g. in combination with a steam treatment of upper part.

Tanning is used as the conventional ways of treating leather and may be applied to the invention. Depending on the compounds, the color and texture of the fabric may change. The technical definition of tanning is well known in the art, but briefly, according to Anthony D. Covington "Tanning Chemistry" chapter 10, the only strict definition of tanning is the conversion of a putrescible organic material into a stable material capable of resisting biochemical attack. Tanning involves a number of steps and reactions depending on the initial material and the final product.

In the case of collagen, it is the sidechains that largely define its reactivity and its ability to be modified by the stabilizing reactions of tanning when leather is made. In addition, the chemistry of the backbone, defined by the peptide links, offers different reaction sites that can be exploited in some tanning processes. During the tanning process, modification of collagen by the chemistry of the tanning agent(s) affects the different features of the properties of the material; The hydrophilic-hydrophobic balance of the leather may be markedly affected by the chemistry of the tanning agent by changing the relationship between the leather and the solvent, which in turn could affect the equilibrium of any reagent between the solvent and the substrate. Also, the site of reaction between the reagent and the collagen may affect the isoelectric point of the collagen and consequently there could be a different relationship between pH and charge on the leather. The lower the isoelectric point, the more anionic or less cationic the charge on the pelt may be at any pH value: the higher the isoelectric point, the more cationic or less anionic the charge on the pelt will be at any pH value. Further, the relative reactions at the sidechains and the backbone of the protein could possible determine the type of reaction and hence the degree of stability of the tannage: the fastness of the reagent may be influenced by the interaction between reagents and the substrate.

Hydrothermal stability as used herein could possibly be measured through the shrinkage temperature (Ts) of a hide. This is the temperature at which the energy input (heat) exceeds the energy bound in existing hydrogen bonding of the collagen structure resulting in the decomposition of the helical structure. The shrinkage temperature for untanned hides is generally around 65 degrees Celsius. The Ts may be increased through the process of tanning.

Chromium(III) sulfate ($[Cr(H2O)6]2(SO4)3$) has long been regarded as the most efficient and effective tanning agent. Chromium(III) compounds of the sort used in tanning are significantly less toxic than hexavalent chromium. Chromium(III) sulfate dissolves to give the hexaaquachromium(III) cation, $[Cr(H2O)6]3+$, which at higher pH undergoes processes called olation to give polychromium(III) compounds that are active in tanning being the cross-linking of the collagen subunits. The chemistry of $[Cr(H2O)6]3+$ is more complex in the tanning bath rather than in water due to the presence of a variety of ligands. Some ligands include the sulfate anion, the collagen's carboxyl groups, amine groups from the side chains of the amino acids, and masking agents. Masking agents are carboxylic acids, such as acetic acid, used to suppress formation of polychromium(III) chains. Masking agents allow the tanner to further increase the pH to increase collagen's reactivity without inhibiting the penetration of the chromium(III) complexes.

Collagen is characterized by a high content of glycine, proline, and hydroxyproline, usually in the repeat -gly-pro-hypro-gly-. These residues give rise to collagen's helical structure. Collagen's high content of hydroxyproline allows for significant cross-linking by hydrogen bonding within the helical structure. Ionized carboxyl groups (RCO2-) are formed by hydrolysis of the collagen by the action of hydroxide. This conversion occurs during the liming process, before introduction of the tanning agent (chromium salts). The ionized carboxyl groups coordinate as ligands to the chromium(III) centers of the oxo-hydroxide clusters.

Tanning increases the spacing between protein chains in collagen from 10 to 17 Å. The difference is consistent with cross-linking by polychromium species, of the sort arising from olation and oxolation.

One way of performing a tanning is explained in the following. Prior to the introduction of the basic chromium species in tanning, several steps are required to produce a tannable hide. The pH must be very acidic when the chromium is introduced to ensure that the chromium complexes are small enough to fit in between the fibers and residues of the collagen. Once the desired level of penetration of chrome into the substance is achieved, the pH of the material is raised again to facilitate the process. This step is known as basification. In the raw state, chrome-tanned skins are greyish-blue, so are referred to as wet blue. Chrome tanning is faster than vegetable tanning (less than a day for this part of the process) and produces a stretchable leather which is excellent for use in handbags and garments.

Subsequent to application of the chromium agent, the bath is treated with sodium bicarbonate to increase the pH to 4.0-4.3, which induces cross-linking between the chromium and the collagen. The pH increase is normally accompanied by a gradual temperature increase up to 40 °C. Chromium's ability to form such stable bridged bonds explains why it is considered one of the most efficient tanning compounds. This efficiency is characterized by its increased hydrothermal stability of the skin, and its resistance to shrinkage in heated water.

The leather of the leather laminate may typically comprise tanning agents in the amount of 3 to 12% by weight of the leather when the tanning agents includes chrome tanning agents.

The chrome tanning agents includes chromium, chromium salts and/or derivatives thereof.

The leather of the leather laminate may as a further restriction in relation to the total content of tanning agent in the leather comprise chrome tanning agent(s) in the amount of 1 to 7 % by weight of the leather, such as 2 to 6% by weight of the leather such as 2 to 5% by weight of the leather.

The specific content of chrome tanning in the amount of 1 to 7% by weight of the leather, such as 2 to 5% by weight of the leather is in particular attractive in relation to the inventive leather laminate as this content of chrome in the leather of the laminate makes is possible to use heat-activated adhesive to attach the leather to the reinforcing fabric. It is moreover, and even more advantageous in applications where the leather as to be steamed e.g. for purposes of shaping etc.

The chrome tanning agents includes chromium, chromium salts and/or derivatives thereof.

## Claims

1. A footwear comprising an upper part (UP) and a sole (101), the upper part (UP) being attached to the sole (101),

   the upper part being formed by at least two footwear defining parts,
   the at least two footwear defining parts comprising a vamp (102) and a quarter (103), wherein at least one of the at least two footwear defining parts are formed by a leather laminate (600),
   the leather laminate (600) being formed as a composite laminate having a leather layer (601) laminated to a reinforcing fabric (603) by means of an adhesive (602),
   wherein the leather layer (601) is at least a part of an outer surface of the footwear, and
   **characterised in that**
   the tensile strength of the reinforcing fabric is at least above 1GPa.

2. The footwear according to claim 1, wherein the footwear has a longitudinal direction (LD), wherein the leather layer (601) of the leather laminate (600) has a stiffness orientation (SO), and wherein the stiffness orientation of the leather layer of at least one of the at least two footwear defining parts (102 and/or 103) is inclined relatively to the longitudinal direction of the footwear.

3. The footwear according to claim 1, wherein the inclination of the stiffness orientation (SO) relative to the longitudinal direction (LD) of the footwear is more than 20 degrees, such as substantially 45 degrees, such as substantially 60 degrees, such as substantially 75 degrees, such as substantially 90 degrees.

4. The footwear according to any of the claims 1-3, wherein the stiffness orientation (SO) is defined with reference to the stiffness orientation of the same leather of the originating tanned hide prior to processing of the thickness of the leather and lamination to the reinforcing fabric.

5. The footwear according to any of the claims 1-4, wherein the footwear has a longitudinal direction (LD), wherein the leather of the laminate (600) has a stiffness orientation (SO) prior to thickness-processing and lamination and wherein said stiffness orientation when related to a corresponding at least one of the footwear defining part is inclined relatively to the longitudinal direction (LD).

6. The footwear according to any of the claims 1-5, wherein said at least one of the at least two footwear defining parts (FDP) is formed by a leather laminate (LL) and

   - wherein the at least one of the at least two footwear defining parts is a vamp and/or
   - wherein the at least one of the at least two footwear defining parts is a quarter.

7. The footwear according to any of the claims 1-6, wherein the leather is tanned and extends in a X and Y direction.

8. The footwear according to any of the claims 1-7, wherein the leather of the leather laminate is tanned by means of tanning agents and wherein the tanning agent are based on chromium-based compounds or derivatives thereof.

9. The footwear according to any of the claims 1-8, wherein the difference in stiffness in the X and Y direction has been reduced prior to lamination by reducing thickness of the tanned un-laminated leather prior to lamination.

10. The footwear according to any of the claims 1-9, wherein the vamp of the footwear is formed by said leather laminate, and

wherein the leather of the vamp is

- at least partly from the shoulder region of a leather hide,
- at least partly from the leg region of a leather hide and/or
- at least partly from the belly region of a leather hide.

11. The footwear according to any of the claims 1-10, wherein the quarter of the footwear is formed by said leather laminate, and wherein the leather of the quarter is at least partly from the shoulder region of a leather hide.

12. Method of manufacturing a footwear comprising an upper part and a sole part, the method comprising the steps of:

- providing a plurality of footwear defining parts, including at least a vamp (102) and/or a quarter (103),

at least the vamp (102) and/or the quarter (103) being formed by a leather laminate,

- attaching the upper part (UP) to the sole part (SP),
- wherein the leather laminate comprises a leather layer and a reinforcing fabric laminated together by an adhesive,
- wherein the vamp is cut from a tanned hide, at least partly from the leg region, the belly region or the shoulder region, and
- **characterised in that** the tensile strength of the reinforcing fabric is at least above 1 GPa.

13. Method of manufacturing a leather laminate comprising the steps of

- providing a tanned unlaminated leather layer
- obtaining a stiffness modified leather by reducing the difference in stiffness in the X and Y directions of the leather by reducing the thickness of the tanned unlaminated leather layer
- providing a leather laminate by laminating the stiffness modified leather to a reinforcing fabric by means of at least one adhesive,

**characterised in that** the tensile strength of the reinforcing fabric is at least above 1 GPa.

14. The footwear according to claims 1-11, wherein the upper of the footwear comprise more than 50% of the leather laminate, such as more than 60%, such as more than 70%.

15. Footwear vamp, wherein the vamp is formed of a leather laminate (600), the leather laminate (600) being formed as a composite laminate having a leather layer (601) laminated to a reinforcing fabric (603) by means of an adhesive (602), wherein the leather of the vamp laminate has a stiffness orientation (SO) which is inclined in relation to the longitudinal direction of the vamp and **characterised in that** the tensile strength of the reinforcing fabric is at least above 1 GPa.

**Patentansprüche**

1. Schuhwerk, umfassend einen oberen Teil (UP) und eine Sohle (101), wobei der obere Teil (UP) an der Sohle (101) befestigt ist,

wobei der obere Teil durch mindestens zwei das Schuhwerk definierende Teile ausgebildet ist, die mindestens zwei das Schuhwerk definierenden Teile umfassend ein Blatt (102) und ein Quartier (103), wobei mindestens einer der mindestens zwei das Schuhwerk definierenden Teile durch ein Lederlaminat (600) ausgebildet ist, wobei das Lederlaminat (600) als ein Verbundlaminat ausgebildet ist, das eine Lederschicht (601) aufweist, die mittels eines Klebstoffs (602) auf ein Verstärkungsgewebe (603) laminiert ist, wobei die Lederschicht (601) mindestens ein Teil einer Außenoberfläche des Schuhwerks ist, und **dadurch gekennzeichnet, dass** die Zugfestigkeit des Verstärkungsgewebes mindestens über 1 GPa liegt.

2. Schuhwerk nach Anspruch 1, wobei das Schuhwerk eine Längsrichtung (LD) aufweist, wobei die Lederschicht (601) des Lederlaminats (600) eine Steifigkeitsausrichtung (SO) aufweist und wobei die Steifigkeitsausrichtung der Lederschicht von mindestens einem der mindestens zwei das Schuhwerk definierenden Teile (102 und/oder 103) bezüglich der Längsrichtung des Schuhwerks geneigt ist.

3. Schuhwerk nach Anspruch 1, wobei die Neigung der Steifigkeitsausrichtung (SO) bezüglich der Längsrichtung (LD) des Schuhwerks mehr als 20 Grad beträgt, wie im Wesentlichen 45 Grad, wie im Wesentlichen 60 Grad, wie im Wesentlichen 75 Grad, wie im Wesentlichen 90 Grad.

4. Schuhwerk nach einem der Ansprüche 1 bis 3, wobei die Steifigkeitsausrichtung (SO) unter Bezugnahme auf die Steifigkeitsausrichtung des gleichen Leders der ursprünglichen gegerbten Haut vor einer Bearbeitung der Dicke des Leders und einer Laminierung auf das Verstärkungsgewebe definiert ist.

5. Schuhwerk nach einem der Ansprüche 1 bis 4, wobei das Schuhwerk eine Längsrichtung (LD) aufweist, wobei das Leder des Laminats (600) vor einer Dickenbearbeitung und der Laminierung eine Steifigkeitsausrichtung (SO) aufweist und wobei die Steifigkeitsausrichtung, wenn sie sich auf einen entsprechenden mindestens einen der das Schuhwerk definierenden Teile bezieht, bezüglich der Längsrichtung (LD) geneigt ist.

6. Schuhwerk nach einem der Ansprüche 1 bis 5, wobei der mindestens eine der mindestens zwei das Schuhwerk definierenden Teile (FDP) durch ein Lederlaminat (LL) ausgebildet ist und

   - wobei der mindestens eine der mindestens zwei das Schuhwerk definierenden Teile ein Blatt ist und/oder
   - wobei der mindestens eine der mindestens zwei das Schuhwerk definierenden Teile ein Quartier ist.

7. Schuhwerk nach einem der Ansprüche 1 bis 6, wobei das Leder gegerbt ist und sich in einer X- und einer Y-Richtung erstreckt.

8. Schuhwerk nach einem der Ansprüche 1 bis 7, wobei das Leder des Lederlaminats mittels Gerbmitteln gegerbt ist und wobei die Gerbmittel auf chrombasierten Verbindungen oder Derivaten davon basieren.

9. Schuhwerk nach einem der Ansprüche 1 bis 8, wobei der Steifigkeitsunterschied in der X- und der Y-Richtung vor der Laminierung durch Reduzieren der Dicke des gegerbten, unlaminierten Leders vor der Laminierung reduziert wurde.

10. Schuhwerk nach einem der Ansprüche 1 bis 9, wobei das Blatt des Schuhwerks durch das Lederlaminat ausgebildet ist und
wobei das Leder des Blatts

   - mindestens teilweise aus dem Schulterbereich einer Lederhaut,
   - mindestens teilweise aus dem Beinbereich einer Lederhaut und/oder
   - mindestens teilweise aus dem Bauchbereich einer Lederhaut ist.

11. Schuhwerk nach einem der Ansprüche 1 bis 10, wobei das Quartier des Schuhwerks durch das Lederlaminat ausgebildet ist und wobei das Leder des Quartiers mindestens teilweise aus dem Schulterbereich einer Lederhaut ist.

12. Verfahren zum Herstellen eines Schuhwerks, umfassend einen oberen Teil und einen Sohlenteil, das Verfahren umfassend die Schritte:

   - Bereitstellen einer Vielzahl von das Schuhwerk definierenden Teilen, einschließlich mindestens eines Blatts (102) und/oder eines Quartiers (103),
   wobei mindestens das Blatt (102) und/oder das Quartier (103) durch ein Lederlaminat ausgebildet sind,
   - Befestigen des oberen Teils (UP) an dem Sohlenteil (SP),
   - wobei das Lederlaminat eine Lederschicht und ein Verstärkungsgewebe umfasst, die durch einen Klebstoff zusammenlaminiert sind,
   - wobei das Blatt aus einer gegerbten Haut geschnitten ist, mindestens teilweise aus dem Beinbereich, dem Bauchbereich oder dem Schulterbereich, und
   - **dadurch gekennzeichnet, dass** die Zugfestigkeit des Verstärkungsgewebes mindestens über 1 GPa beträgt.

13. Verfahren zum Herstellen eines Lederlaminats, umfassend die Schritte

- Bereitstellen einer gegerbten, unlaminierten Lederschicht
- Erhalten eines steifigkeitsmodifizierten Leders durch Reduzieren des Steifigkeitsunterschieds in der X- und der Y-Richtung des Leders durch Reduzieren der Dicke der gegerbten, unlaminierten Lederschicht
- Bereitstellen eines Lederlaminats durch Laminieren des steifigkeitsmodifizierten Leders auf ein Verstärkungsgewebe mittels mindestens eines Klebstoffs,

**dadurch gekennzeichnet, dass** die Zugfestigkeit des Verstärkungsgewebes mindestens über 1 GPa beträgt.

**14.** Schuhwerk nach den Ansprüchen 1 bis 11, wobei das Obermaterial des Schuhwerks zu mehr als 50 % das Lederlaminat umfasst, wie zu mehr als 60 %, wie zu mehr als 70 %.

**15.** Schuhwerkblatt, wobei das Blatt aus einem Lederlaminat (600) ausgebildet ist,

wobei das Lederlaminat (600) als ein Verbundlaminat ausgebildet ist, das eine Lederschicht (601) aufweist, die mittels eines Klebstoffs (602) auf ein Verstärkungsgewebe (603) laminiert ist,
wobei das Leder des Blattlaminats eine Steifigkeitsorientierung (SO) aufweist, die in Bezug auf die Längsrichtung des Blatts geneigt ist,
und **dadurch gekennzeichnet, dass** die Zugfestigkeit des Verstärkungsgewebes mindestens über 1 GPa beträgt.

## Revendications

**1.** Article chaussant comprenant une partie supérieure (UP) et une semelle (101), la partie supérieure (UP) étant fixée à la semelle (101),

la partie supérieure étant formée par au moins deux parties de définition d'article chaussant,
les au moins deux parties de définition d'article chaussant comprenant une empeigne (102) et un quartier (103),
dans lequel au moins l'une des au moins deux parties de définition d'article chaussant est formée par un stratifié de cuir (600),
le stratifié de cuir (600) étant formé en tant que stratifié composite ayant une couche de cuir (601) stratifiée à un tissu de renforcement (603) au moyen d'un adhésif (602),
dans lequel la couche de cuir (601) est au moins une partie d'une surface externe de l'article chaussant, et **caractérisé en ce que** la résistance en traction du tissu de renforcement est au moins supérieure à 1 GPa.

**2.** Article chaussant selon la revendication 1, dans lequel l'article chaussant a une direction longitudinale (LD), dans lequel la couche de cuir (601) du stratifié de cuir (600) a une orientation de rigidité (SO), et dans lequel l'orientation de rigidité de la couche de cuir d'au moins l'une des au moins deux parties de définition d'article chaussant (102 et/ou 103) est inclinée par rapport à la direction longitudinale de l'article chaussant.

**3.** Article chaussant selon la revendication 1, dans lequel l'inclinaison de l'orientation de rigidité (SO) par rapport à la direction longitudinale (LD) de l'article chaussant est supérieure à 20 degrés, telle que sensiblement 45 degrés, telle que sensiblement 60 degrés, telle que sensiblement 75 degrés, telle que sensiblement 90 degrés.

**4.** Article chaussant selon l'une quelconque des revendications 1 à 3, dans lequel l'orientation de rigidité (SO) est définie en référence à l'orientation de rigidité du même cuir de la peau tannée d'origine avant traitement de l'épaisseur du cuir et stratification au tissu de renforcement.

**5.** Article chaussant selon l'une quelconque des revendications 1 à 4, dans lequel l'article chaussant a une direction longitudinale (LD),
dans lequel le cuir du stratifié (600) a une orientation de rigidité (SO) avant traitement d'épaisseur et stratification et dans lequel ladite orientation de rigidité lorsqu'elle se rapporte à au moins l'une des parties de définition d'article chaussant correspondante est inclinée par rapport à la direction longitudinale (LD).

**6.** Article chaussant selon l'une quelconque des revendications 1 à 5, dans lequel ladite au moins une des au moins deux parties de définition d'article chaussant (FDP) est formée par un stratifié de cuir (LL) et

- dans lequel l'au moins une des au moins deux parties de définition d'article chaussant est une empeigne et/ou

- dans lequel l'au moins une des au moins deux parties de définition d'article chaussant est un quartier.

7. Article chaussant selon l'une quelconque des revendications 1 à 6, dans lequel le cuir est tanné et s'étend dans une direction X et Y.

8. Article chaussant selon l'une quelconque des revendications 1 à 7, dans lequel le cuir du stratifié de cuir est tanné au moyen d'agents de tannage et dans lequel les agents de tannage sont à base de composés à base de chrome ou de dérivés de ceux-ci.

9. Article chaussant selon l'une quelconque des revendications 1 à 8, dans lequel la différence de rigidité dans la direction X et Y a été réduite avant stratification en réduisant l'épaisseur du cuir tanné non stratifié avant stratification.

10. Article chaussant selon l'une quelconque des revendications 1 à 9, dans lequel l'empeigne de l'article chaussant est formée par ledit stratifié de cuir, et

dans lequel le cuir de l'empeigne

- provient au moins partiellement du collet d'une peau de cuir,
- provient au moins partiellement des flancs d'une peau de cuir et/ou
- provient au moins partiellement de la culée d'une peau de cuir.

11. Article chaussant selon l'une quelconque des revendications 1 à 10, dans lequel le quartier de l'article chaussant est formé par ledit stratifié de cuir, et dans lequel le cuir du quartier provient au moins partiellement du collet d'une peau de cuir.

12. Procédé de fabrication d'un article chaussant comprenant une partie supérieure et une partie semelle, le procédé comprenant les étapes consistant à :

- fournir une pluralité de parties de définition d'article chaussant, comportant au moins une empeigne (102) et/ou un quartier (103),
au moins l'empeigne (102) et/ou le quartier (103) étant formés par un stratifié de cuir,
- fixer la partie supérieure (UP) à la partie semelle (SP),
- dans lequel le stratifié de cuir comprend une couche de cuir et un tissu de renforcement stratifiés ensemble par un adhésif,
- dans lequel l'empeigne est coupée d'une peau tannée, provenant au moins partiellement des flancs, de la culée ou du collet, et
- **caractérisé en ce que** la résistance en traction du tissu de renforcement est au moins supérieure à 1 GPa.

13. Procédé de fabrication d'un stratifié de cuir comprenant les étapes consistant à

- fournir une couche de cuir tannée non stratifiée
- obtenir un cuir modifié en rigidité en réduisant la différence de rigidité dans les directions X et Y du cuir en réduisant l'épaisseur de la couche de cuir tannée non stratifiée
- fournir un stratifié de cuir en stratifiant le cuir modifié en rigidité à un tissu de renforcement au moyen d'au moins un adhésif,
- **caractérisé en ce que** la résistance en traction du tissu de renforcement est au moins supérieure à 1 GPa.

14. Article chaussant selon les revendications 1 à 11, dans lequel la partie supérieure de l'article chaussant comprend plus de 50 % du stratifié de cuir, tel que plus de 60 %, tel que plus de 70 %.

15. Empeigne d'article chaussant, dans laquelle l'empeigne est formée d'un stratifié de cuir (600),

le stratifié de cuir (600) étant formé en tant que stratifié composite ayant une couche de cuir (601) stratifiée à un tissu de renforcement (603) au moyen d'un adhésif (602),
dans laquelle le cuir du stratifié d'empeigne a une orientation de rigidité (SO) qui est inclinée par rapport à la direction longitudinale de l'empeigne
et **caractérisée en ce que** la résistance en traction du tissu de renforcement est au moins supérieure à 1 GPa.

*Fig. 1*

*Fig. 2*

Fig. 3

400

Fig. 4

*Fig. 5*

EP 3 897 271 B1

600

601

602

603

*Fig. 6*

Fig. 7A

Fig. 7B

Fig. 7C

Fig. 7D

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0932703 A1